# EUROPEAN PATENT SPECIFICATION

(11) **EP 2 394 827 B1**
(45) Date of publication and mention of the grant of the patent: **07.08.2013**
(21) Application number: 09839524.7
(22) Date of filing: 09.06.2009
(51) Int. Cl.: B60C 23/04

(54) **A TIRE PRESSURE MONITORING SYSTEM**
REIFENDRUCKÜBERWACHUNGSSYSTEM
SYSTÈME DE SURVEILLANCE DE LA PRESSION D'UN PNEU

(30) Priority: 03.02.2009 CN 200910045727
(43) Date of publication of application: 14.12.2011
(73) Proprietor: Shanghai Baolong Automotive Corporation, Songjiang District Shanghai 201620 (CN)
(72) Inventor: LI, Wei, Shanghai 201620 (CN)
(74) Representative: Albutt, Anthony John
(86) International application number: PCT/CN2009/072188
(87) International publication number: WO 2010/088807

(56) References cited:
- EP-A1- 1 946 945
- CN-A- 101 300 144
- JP-A- 2006 044 448
- US-A1- 2002 084 896
- US-A1- 2006 279 416
- US-B2- 7 348 878
- US-B2- 7 348 878

## Description

### TECHNICAL FIELD

The present invention relates to a tire pressure monitoring system (TPMS), more particularly, to a TPMS of a truck whose trailer is frequently changed.

### BACKGROUND ART

The tire pressure monitoring system has entered the field of cars, and is mature for its technical application. However, the tire pressure monitoring system is seldom used in the field of trucks, because the trailer of a truck is often changed, sometimes several times per day. This causes the monitored objects in the truck system, tires, are often changed, so that the tire monitoring is hard.

In this condition, the common solution is mounting a receiver on a trailer for monitoring the tires of the trailer and mounting a receiver on a truck head for monitoring the tires of the head, the two receivers being connected to each other via a wired manner, and the data being transmitted to a display on the head via a wired manner. When the trailer of the truck is changed, the connecting wires between them should be changed.

This solution can solve the problem brought by the change of trailer, but has an obvious objection such as arranging many wires on the truck, so that its installation is quite troublesome. Moreover, it needs a professional manual operation after changing the trailer, so as to allow the system update to recognize the monitored transmitter. This solution has a high installation cost and low maintenance efficiency.

In order to solve the above problem, US2006/0279416A1 discloses a tire pressure monitoring system, which monitors the tires of the trailer portion via a combination of a transponder 21 and an ID reader 13. The ID reader 13 is mounted on the rear of the truck head, and the transponder 21 is mounted on the trailer. A receiver on the head controls the transponder 21 via the information transmitted by the ID reader 13, the transponder 21 then transmits the data to the ID reader 13, and the ID reader 13 then feedbacks the relaid data to the receiver. Therefore, it solves the problem of the connecting wires between the head and the trailer. However, this solution still has the following disadvantages:
1. The system is relatively complex, because the head portion have to be arranged with the ID reader and the trailer information receiving circuit , and the wires should be led to the rear of the head, therefore, the amount of the installed wires in the head portion is not reduced obviously;
2. The ID reader should be activated to read the tire ID information of the trailer portion once changing the trailer.

US 7 348 878 B2 relates to a tire pressure monitoring system with permanent tire identification. EP 1 946 945 Al relates to a vehicle monitoring system. US 2002/0084896 Al relates to a tire condition sensor communication with tire location provided via vehicle-mounted identification units. JP 2006 044448 A relates to a wheel information recognition system, vehicle body side wheel information recognition device, and wheel side wheel information recognition device.

### DISCLOSURE OF THE INVENTION

Aspects of the invention are set out in the accompanying claims.

In order to address the above problems, the present disclosure provides a tire pressure monitoring system which is simpler and more flexible.

According to an embodiment of the present invention, a tire pressure monitoring system adapted to an automobile having a first component and a changeable second component is provided, the tire pressure monitoring system comprising a register, a relay and a receiver. The register transmits the registered code of the automobile via a wireless manner. The relay is disposed in the second component for relaying a second tire information transmitted by the tire pressure transmitter for each tire in the second component. When the relay receives the registered code, it attached the registered code to the second tire information and relays the second tire information. And the receiver is disposed in the first component for receiving the second tire information relaid by the relay. When the registered code included in the second tire information is consistent with the registered code of said automobile stored in the receiver, the receiver processes the second tire information as the tire information of the second component of the automobile.

In an embodiment of the present invention, the first component is a head of the automobile, and the second component is a trailer of the automobile.

In an embodiment of the present invention, the register is disposed in the first component and transmits the registered code periodically. In another embodiment of the present invention, the register can be a separate device.

In an embodiment of the present invention, the second tire information comprise tire ID information and a tire pressure, and the tire ID information corresponds to the ID information of the tire pressure transmitter in the second component.

In an embodiment of the present invention, the relay comprises a code reading unit for reading the tire ID information of each tire in the second component and a controller for process the relaying of the second tire information. The tire ID information is stored in an ID code information memory which is inserted into the code reading unit. The controller processes the second tire information when the tire ID information in the second tire information transmitted by the tire pressure transmitter is consistent with the tire ID information read by the code reading unit.

In an embodiment, the relay may further comprises a standard pressure setting circuit for providing an interface to set the standard pressure value of each tire in the second component.

In an embodiment of the present invention, the receiver refreshes the tire ID information according to the received second tire information.

In an embodiment of the present invention, the receiver is further used to receive the first tire information transmitted by the tire pressure transmitter for each tire in the first component. When the received tire ID information included in the first tire information is consistent with the tire ID information stored in the receiver, the receiver processes the first tire information as the tire information of the first component of the automobile. In this embodiment, the receiver comprises a code reading unit for reading the tire ID information of each tire in the first component and a standard pressure setting circuit for providing an interface to set the standard pressure value of each tire in the first component. The tire ID information is stored in an ID code information memory which is inserted into the code reading unit.

Comparing with the prior arts, the present invention has at least some of the following prominent advantages:
1. A registered code transmitter is used to automatically recognize codes, so that the monitoring process is completely automatized without manual operation and professional operation during use, the potential mistakes which may be caused by manual code recognizing is reduced, its use is simpler and more convenient, the whole process is automatized, the maintenance cost during use is reduced, and the service efficiency of automobile is increased.
2. Because the connection between the relay and the receiver is a wireless connection, its installation is much simpler, the number of wires is reduced, and the hardware cost and the labor cost are reduced.

### BRIEF DESCRIPTION OF THE DRAWINGS

The features and characters of the present invention will be further described by means of the following embodiments and figures.
Fig. 1 is a schematic view which shows a tire pressure monitoring system according to an embodiment of the present invention arranged on an automobile.
Fig. 2 shows the structure of a tire pressure monitoring system according to an embodiment of the present invention.
Fig. 3 shows the structure of a register according to an embodiment of the present invention.
Fig. 4 shows the structure of a relay according to an embodiment of the present invention.
Fig. 5 shows the structure of a receiver according to an embodiment of the present invention.
Fig. 6 is a workflow view which shows a receiver according to an embodiment of the present invention receiving the information of a relay.

### BEST MODE FOR CARRYING OUT THE INVENTION

It is necessary for many trucks to change the trailers and heads, therefore, the tires in the same system is not fixed, that is, the tires monitored by the system is not fixed. However, the tires in the head or the tires in the trailer are substantially fixed. Therefore, according to an embodiment of the present invention, a tire pressure monitoring system (TPMS) is provided. The system could recognize automatically the change of trailer and its installation and use is quite simple by providing a code register which registers via a wireless manner.

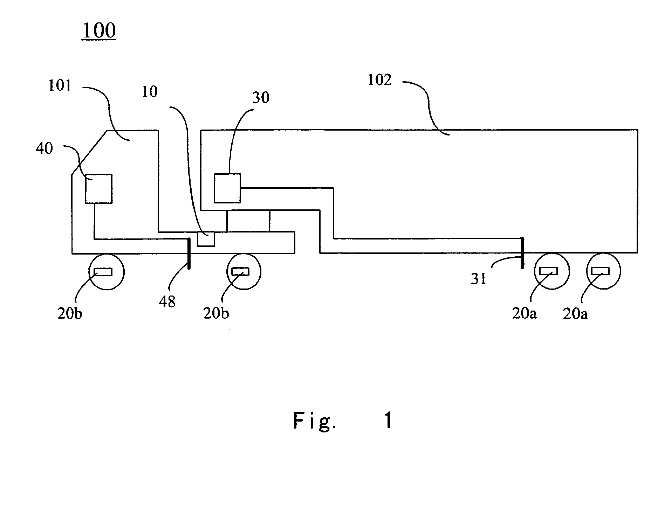

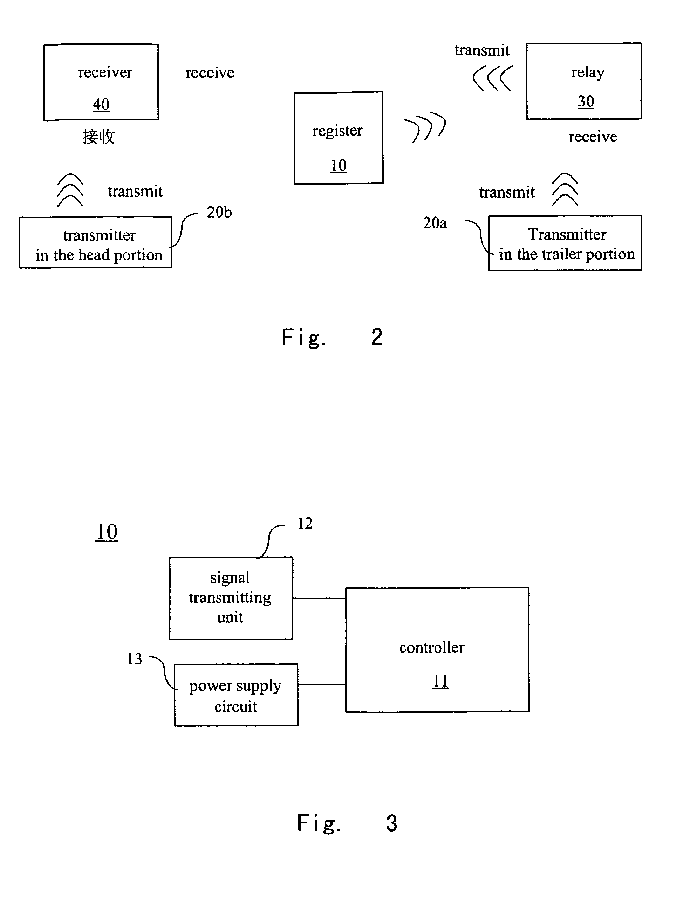

Fig. 1 is a schematic view which shows a tire pressure monitoring system according to an embodiment of the present invention arranged on an automobile. Fig. 2 shows the structure of a tire pressure monitoring system (TPMS) according to an embodiment of the present invention. The tire pressure monitoring system is mounted on an automobile 100 which has a first component (such as head portion 101) and a second component (such as trailer portion 102). The tire pressure monitoring system comprises a register 10, tire pressure transmitters 20a in the trailer portion, tire pressure transmitters 20b in the head portion, a relay 30 and a receiver 40.

Tire pressure transmitters 20a, 20b are mounted on the tires of the automobiles respectively, so as to monitor the pressure (and optional temperature) of the tires and then transmit the information periodically. When it is necessary to alarm, the tire pressure transmitters transmit data so as to inform the receiver 40 to alarm. Herein, the tire information transmitted by the tire pressure transmitters 20a is referred as the second tire information, and the tire information transmitted by the tire pressure transmitters 20b is referred as the first tire information. The first and second tire information can each comprise tire pressure and tire ID information. The tire ID information actually corresponds to the ID of the pressure transmitter. The tire pressure transmitters 20a in the trailer portion transmit the information which should be relaid by the relay 30, and the tire pressure transmitters 20b in the head portion transmit the information directly to the receiver 40. In the following description, the information transmitting flow of the tire pressure transmitters 20a in the trailer portion would be emphasized.

In an embodiment, as shown in Fig. 3, the register 10 is mounted on the head 101, includes a fixed and unique automobile registered code, and transmits the registered code periodically. The register 10 has a structure as shown in Fig. 3, which comprises a controller 11, a signal transmitting unit 12 and a battery-type power supply circuit 13. The register 10 is supplied by a lithium cell. In a practical embodiment, the transmitting power of the register 10 is controlled so that the coverage range thereof is in proximity to the receiving antenna 31 of the receiver 30 in the present system, therefore, the relay can receive the registered code securely, and the relay in another vehicle cannot receive the registered code. The register 10 uses a large capacity battery so that its work life can achieve as long as 10 years. In another embodiment, the register 10 can also provide registration by transmitting the registered code to the receiver 40. In yet another embodiment, the register 10 can be a separate handheld device, so that the operator operates it to transmit the registered code to the relay 30 when needed.

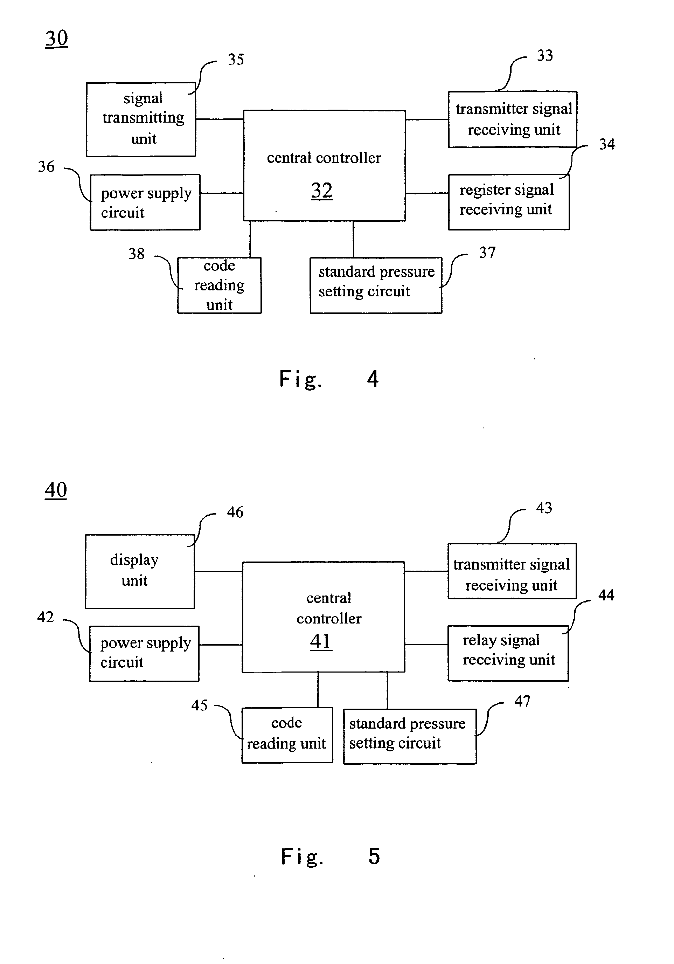

As shown in Fig. 2 and Fig. 4, the relay 30 comprises a central controller 32, a transmitter signal receiving unit 33, a register signal receiving unit 34, a signal transmitting unit 35, a power supply circuit 36, a standard pressure setting circuit 37 and a code reading unit 38, etc. The relay 30 is mounted in the trailer 102, and is connected to the positive power supply in the trailer portion, so as to relay the second tire information transmitted by the tire pressure transmitters 20a in the trailer 20. The relay 30 can operate normally only after registered by the register 10. In particular, the relay 30 receives the registered code information through the register signal receiving unit 34, saves the registered code information, and after the registration is successful, transmits the monitored second tire information (such as tire ID, tire position, standard tire pressure, tire pressure, temperature, etc.) and the registered code information to the receiver 40 through the signal transmitting unit 35. An exemplary transmitting process is substantially as follows: the relay 30 receives the tire information from the tire pressure transmitters 20a through the transmitter signal receiving unit 33. The code reading unit 38 of the relay 30 can read the tire ID information of the tires in the trailer portion. In an embodiment, the tire ID information corresponding to each transmitter 20a can be stored in a corresponding ID code information memory (such as IC card) respectively, and can be read by the code reading unit 38 in which the memory is inserted after the transmitters is already mounted. The code reading unit 38 can be configured by hardware and/or software. When the relay 30 receives the second tire information, the central controller 32 retrieves the tire ID information and compares it with the tire ID information originally in the code reading unit 32. If consistent, the central controller 32 pertains it and transmits it to the receiver 40 through the signal transmitting unit 35, and if inconsistent, the central controller 32 discards it without processing.

Preferably, the relay 30 has a function of setting a standard pressure value. The standard pressure setting circuit 37 provides an interface to set the standard pressure value of each tire. The method for setting the standard pressure value is as follows: when the tire should be set a standard pressure value (such as when mounting the transmitter for the first time and changing the transmitter), firstly the tire pressure is increased to the standard pressure, then the setting key of the relay 30 is pressed for 5 seconds, so that the relay can be disposed in a standard pressure setting mode. In this standard pressure setting mode, the tire pressure can be increased to the standard pressure, then the relay obtains the standard pressure for each tire in the trailer according to a certain algorithm (such as averaging) based on the received data.

In practice, after the relay 30 is activated, it reads tire ID information, standard pressure set value and the like in the ID code information memory. Thereafter, the relay 30 waits for receiving the registered code, enters a normal monitor mode after receiving the registered code, then transmits immediately all the monitored second tire information attached with the registered code. Thereafter, once the relay 30 receives the monitored second tire information each time, it relays the same.

As shown in Fig. 2 and Fig. 5, the receiver 40 is mounted in the head 101, and comprises a central controller 41, a power supply circuit 42, a transmitter signal receiving unit 43, a relay signal receiving unit 44, a code reading unit 45, a display unit 46, a standard pressure setting circuit 47 and antenna 48, etc.

An ID code information memory (not shown) corresponding to the transmitters 20b in the head portion can be mounted on the code reading unit 45 in the receiver 40, so as to directly monitor the tire pressure transmitters 20b in the head portion. In particular, the receiver 40 receives the first tire information from the tire pressure transmitters 20b through the transmitter signal receiving unit 43. When the receiver 40 receives the first tire information, the central controller 41 retrieves the tire ID information and compares it with the tire ID information originally in the code reading unit 45. If consistent, the central controller 41 pertains it and processes it as head tire information, and if inconsistent, the central controller 41 discards it without processing.

A standard pressure setting circuit 47 may also be disposed in the receiver 40 as in the relay 30, so as to set the standard tire pressure of the head portion.

The receiver 40 can comprises a registered code which is consistent with that in the register 10, as a discriminating identification for recognizing the signal transmitted by the relay. This registered code can be preset in the receiver, or can also be obtained through registration by the register 10. The register 10 can be fixed to some location on the head, or can be a separate handheld device.

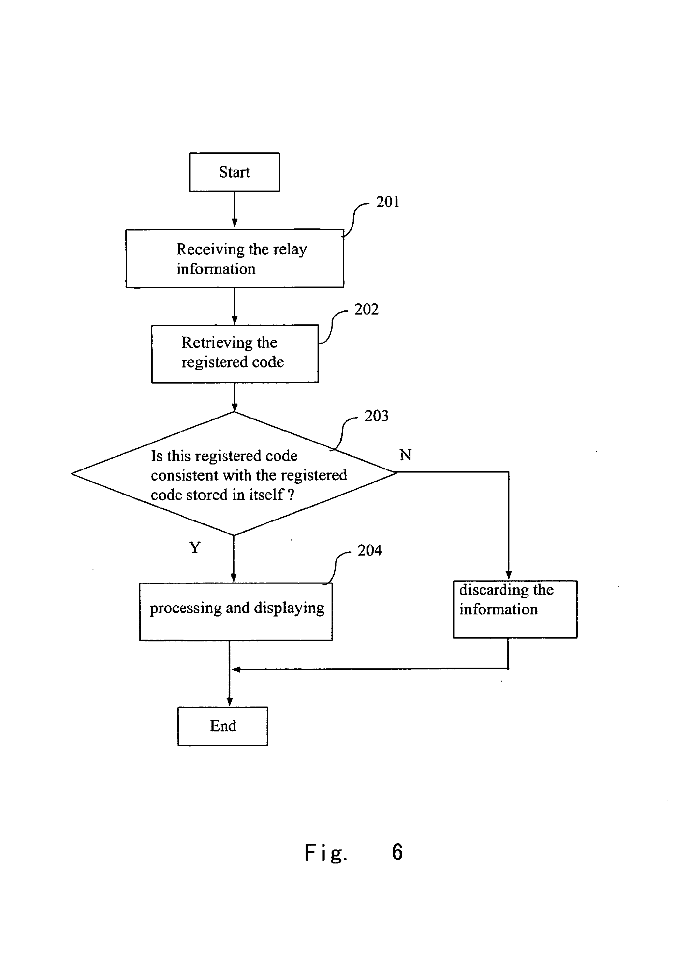

As shown in Fig. 6, after the receiver 40 receives the tire information including the registered code transmitted by the relay 30 via the relay signal receiving unit 44 (step 201), the receiver 40 retrieves the registered code (step 202), and compares it with the registered code originally in itself (step 203). If consistent, it shows that this tire information is the information of the current trailer, then the receiver 40 records the trailer tire information monitored by the relay, processes the tire temperature/pressure information transmitted by the relay 30 in sequence (step 204), and for example transmits the information to display on the display unit 46, so as to monitor all the tires in the automobile. If inconsistent, the receiver 40 considers it not as the tire information of the current trailer and discards it.

When the trailer is changed, the relay 30 and tire pressure transmitters 20a is not necessary to change. Instead, the system refreshes the tire ID information according to the second tire information including registered code transmitted by the relay. And monitoring is implemented based on the newly combined system.

In conclusion, the embodiments of the present invention propose a solution for a tire pressure monitoring system of a truck whose trailer is frequently changed, which can automatically recognize the change of tire pressure transmitter due to the change of trailer, and automatically adjust the system, so that the system can automatically monitor the new tire pressure transmitter. Comparing with the prior solutions, the solution proposed by the present disclosure has following advantages:
1. A registered code transmitter is used to automatically recognize codes, so that the monitoring process is completely automatized without manual operation and professional operation during use, the potential mistakes which may be caused by manual code recognizing is reduced, its use is simpler and more convenient, the whole process is automatized, the maintenance cost during use is reduced, and the service efficiency of automobile is increased.
2. Because the connection between the relay and the receiver is a wireless connection, its installation is much simpler, the number of wires is reduced, and the hardware cost and the labor cost are reduced.

## Claims

1. A tire pressure monitoring system adapted to an automobile having a head (101) and a changeable trailer (102), said tire pressure monitoring system comprising:
a register (10) disposed in the head (101) of the automobile for transmitting a registered code of the said automobile periodically via a wireless manner;
a relay (30) disposed in the trailer (102) for relaying a second tire information transmitted by tire pressure transmitter (20a) for each tire in the trailer of the automobile, wherein when the relay (30) receives the registered code, it relays the second tire information after attaching the registered code to the second tire information; and
a receiver (40) disposed in the head (101) of the automobile for receiving the second tire information relaid by the relay, wherein when the registered code included in the second tire information is consistent with the registered code of said automobile stored in the receiver (40), the receiver processes the second tire information as the tire information of the trailer (102).

2. The tire pressure monitoring system according to claim 1, wherein said register transmits said registered code periodically.

3. The tire pressure monitoring system according to claim 1, wherein said second tire information comprises a tire ID information and a tire pressure, and wherein the tire ID information corresponds to the ID information of the tire pressure transmitter in the trailer of the automobile.

4. The tire pressure monitoring system according to claim 3, wherein said relay (30) comprises:
a code reading unit (38) for reading the tire ID information of each tire in the trailer (102) of the automobile, wherein the tire ID information is stored in an ID code information memory which is inserted into the code reading unit (38); and
a controller (32) for processing the relaying of the second tire information, wherein the controller (32) processes the second tire information when the tire ID information in the second tire information transmitted by the tire pressure transmitter (20a) is consistent with the tire ID information read by the code reading unit (32).

5. The tire pressure monitoring system according to claim 4, wherein said relay (30) further comprises:
a standard pressure setting circuit (37) for providing an interface to set a standard pressure value of each tire in the trailer (102) of the automobile.

6. The tire pressure monitoring system according to claim 3, wherein said receiver (40) refreshes the tire ID information according to the received second tire information.

7. The tire pressure monitoring system according to claim 1, wherein said receiver (40) is further used to receive the first tire information transmitted by tire pressure transmitter (20b) for each tire in the head (101) of the automobile, wherein when the received tire ID information attached to the first tire information is consistent with the tire ID information stored in the receiver (40), the receiver (40) processes the first tire information as the tire information of the head (101) of said automobile.

8. The tire pressure monitoring system according to claim 7, wherein said receiver (40) comprises:
a code reading unit (45) for reading the tire ID information of each tire in the head (101) of the automobile, wherein the tire ID information is stored in an ID code information memory which is inserted into the code reading unit (45) ; and
a standard pressure setting circuit (47) for providing an interface to set the standard pressure value of each tire in the head (101) of the automobile.

9. A tire pressure monitoring system adapted to an automobile having a head (101) and a changeable trailer (102), said tire pressure monitoring system comprising:
a separate handheld register (10) for transmitting a registered code of the said automobile via a wireless manner when operated by an operator;
a relay (30) disposed in the trailer (102) for relaying a second tire information transmitted by tire pressure transmitter (20a) for each tire in the trailer of the automobile, wherein when the relay (30) receives the registered code, it relays the second tire information after attaching the registered code to the second tire information; and
a receiver (40) disposed in the head (101) of the automobile for receiving the second tire information relaid by the relay, wherein when the registered code included in the second tire information is consistent with the registered code of said automobile stored in the receiver (40), the receiver(40) processes the second tire information as the tire information of the trailer (102).

10. The tire pressure monitoring system according to claim 9, wherein said second tire information comprises a tire ID information and a tire pressure, and wherein the tire ID information corresponds to the ID information of the tire pressure transmitter in the trailer of the automobile.

11. The tire pressure monitoring system according to claim 10, wherein said relay (30) comprises:
a code reading unit (38) for reading the tire ID information of each tire in the trailer (102) of the automobile, wherein the tire ID information is stored in an ID code information memory which is inserted into the code reading unit (38); and
a controller (32) for processing the relaying of the second tire information, wherein the controller processes the second tire information when the tire ID information in the second tire information transmitted by the tire pressure transmitter (20a) is consistent with the tire ID information read by the code reading unit (38).

12. The tire pressure monitoring system according to claim 11, wherein said relay (30) further comprises:
a standard pressure setting circuit (37) for providing an interface to set a standard pressure value of each tire in the trailer (102) of the automobile.

13. The tire pressure monitoring system according to claim 10, wherein said receiver (40) refreshes the tire ID information according to the received second tire information.

14. The tire pressure monitoring system according to claim 9, wherein said receiver (40) is further used to receive the first tire information transmitted by the tire pressure transmitter (20b) for each tire in the head (101) of the automobile, wherein when the received tire ID information attached to the first tire information is consistent with the tire ID information stored in the receiver (40), the receiver (40) processes the first tire information as the tire information of the head (101) of said automobile.

15. The tire pressure monitoring system according to claim 14, wherein said receiver (40) comprises:
a code reading unit (45) for reading the tire ID information of each tire in the head (101) of the automobile, wherein the tire ID information is stored in an ID code information memory which is inserted into the code reading unit (45); and
a standard pressure setting circuit (47) for providing an interface to set the standard pressure value of each tire in the head (101) of the automobile.

## Patentansprüche

1. Reifendruck-Überwachungssystem, das für ein Kraftfahrzeug geeignet ist, das eine Zugmaschine (101) und einen wechselbaren Sattelauflieger (102) besitzt, wobei das Reifendruck-Überwachungssystem Folgendes umfasst:
ein Register (10), das in der Zugmaschine (101) des Kraftfahrzeugs angeordnet ist, um einen registrierten Code des Kraftfahrzeugs periodisch auf drahtlose Weise zu senden;
eine Weiterleitungseinrichtung (30), die in dem Sattelauflieger (102) angeordnet ist, um zweite Reifeninformationen, die von einem Reifendrucksender (20a) für jeden Reifen in dem Sattelauflieger des Kraftfahrzeugs gesendet werden, weiterzuleiten, wobei die Weiterleitungseinrichtung (30) dann, wenn sie den registrierten Code empfängt, die zweiten Reifeninformationen weiterleitet, nachdem sie den registrierten Code an die zweiten Reifeninformationen angehängt hat; und
einen Empfänger (40), der in der Zugmaschine (101) des Kraftfahrzeugs angeordnet ist, um die von der Weiterleitungseinrichtung weitergeleiteten zweiten Reifeninformationen zu empfangen, wobei der Empfänger dann, wenn der in den zweiten Reifeninformationen enthaltene registrierte Code mit dem in dem Empfänger (40) gespeicherten registrierten Code des Kraftfahrzeugs übereinstimmt, die zweiten Reifeninformationen als die Reifeninformationen des Sattelaufliegers (102) verarbeitet.

2. Reifendruck-Überwachungssystem nach Anspruch 1, wobei das Register den registrierten Code periodisch sendet.

3. Reifendruck-Überwachungssystem nach Anspruch 1, wobei die zweiten Reifeninformationen Reifenkennungsinformationen und einen Reifendruck enthalten und wobei die Reifenkennungsinformationen den Kennungsinformationen des Reifendrucksenders in dem Sattelauflieger des Kraftfahrzeugs entsprechen.

4. Reifendruck-Überwachungssystem nach Anspruch 3, wobei die Weiterleitungseinrichtung (30) Folgendes umfasst:
eine Codeleseeinheit (38), um die Reifenkennungsinformationen jedes Reifens in dem Sattelauflieger (102) des Kraftfahrzeugs zu lesen, wobei die Reifenkennungsinformationen in einem Kennungscodeinformationsspeicher, der in die Codeleseeinheit (38) eingesetzt ist, gespeichert sind; und
eine Steuereinheit (32), um das Weiterleiten der zweiten Kennungsinformationen zu verarbeiten, wobei die Steuereinheit (32) die zweiten Reifeninformationen verarbeitet, wenn die Reifenkennungsinformationen in den zweiten Reifeninformationen, die von dem Reifendrucksender (20a) gesendet werden, mit den Reifenkennungsinformationen, die von der Codeleseeinheit (32) gelesen werden, übereinstimmen.

5. Reifendruck-Überwachungssystem nach Anspruch 4, wobei die Weiterleitungseinrichtung (30) ferner Folgendes umfasst:
eine Nenndruck-Einstellschaltung (37), um eine Schnittstelle bereitzustellen, um einen Nenndruckwert jedes Reifens in dem Sattelauflieger (102) des Kraftfahrzeugs einzustellen.

6. Reifendruck-Überwachungssystem nach Anspruch 3, wobei der Empfänger (40) die Reifenkennungsinformationen in Übereinstimmung mit den empfangenen zweiten Reifeninformationen auffrischt.

7. Reifendruck-Überwachungssystem nach Anspruch 1, wobei der Empfänger (40) ferner verwendet wird, um die von dem Reifendrucksender (20b) gesendeten ersten Reifeninformationen für jeden Reifen in der Zugmaschine (101) des Kraftfahrzeugs zu empfangen, wobei der Empfänger (40) dann, wenn die an die ersten Reifeninformationen angehängten empfangenen Reifenkennungsinformationen mit den in dem Empfänger (40) gespeicherten Reifenkennungsinformationen übereinstimmen, die ersten Reifeninformationen als die Reifeninformationen der Zugmaschine (101) des Kraftfahrzeugs verarbeitet.

8. Reifendruck-Überwachungssystem nach Anspruch 7, wobei der Empfänger (40) Folgendes umfasst:
eine Codeleseeinheit (45), um die Reifenkennungsinformationen jedes Reifens in der Zugmaschine (101) des Kraftfahrzeugs zu lesen, wobei die Reifenkennungsinformationen in einem Kennungscodeinformationsspeicher, der in die Codeleseeinheit (45) eingesetzt ist, gespeichert sind; und
eine Nenndruck-Einstellschaltung (47), um eine Schnittstelle bereitzustellen, um den Nenndruckwert jedes Reifens in der Zugmaschine (101) des Kraftfahrzeugs einzustellen.

9. Reifendruck-Überwachungssystem, das für ein Kraftfahrzeug ausgelegt ist, das eine Zugmaschine (101) und einen wechselbaren Sattelauflieger (102) besitzt, wobei das Reifendruck-Überwachungssystem Folgendes umfasst:
ein separates tragbares Register (10), um einen registrierten Code des Kraftfahrzeugs drahtlos zu senden, wenn es von einer Bedienungsperson bedient wird;
eine Weiterleitungseinrichtung (30), die in dem Sattelauflieger (102) angeordnet ist, um zweite Reifeninformationen, die von einem Reifendrucksender (20a) für jeden Reifen im Sattelauflieger des Kraftfahrzeugs gesendet werden, weiterzuleiten, wobei die Weiterleitungseinrichtung (30) dann, wenn sie den registrierten Code empfängt, die zweiten Reifeninformationen weiterleitet, nachdem sie den registrierten Code an die zweiten Reifeninformationen angehängt hat; und
einen Empfänger (40), der in der Zugmaschine (101) des Kraftfahrzeugs angeordnet ist, um die von der Weiterleitungseinrichtung weitergeleiteten zweiten Reifeninformationen zu empfangen, wobei der Empfänger (40) dann, wenn der in den zweiten Reifeninformationen enthaltene registrierte Code mit dem in dem Empfänger (40) gespeicherten registrierten Code des Kraftfahrzeugs übereinstimmt, die zweiten Reifeninformationen als die Reifeninformationen des Sattelaufliegers (102) verarbeitet.

10. Reifendruck-Überwachungssystem nach Anspruch 9, wobei die zweiten Reifeninformationen Reifenkennungsinformationen und einen Reifendruck enthalten und wobei die Reifenkennungsinformationen den Kennungsinformationen des Reifendrucksenders im Sattelauflieger des Kraftfahrzeugs entsprechen.

11. Reifendruck-Überwachungssystem nach Anspruch 10, wobei die Weiterleitungseinrichtung (30) Folgendes umfasst:
eine Codeleseeinheit (38), um die Reifenkennungsinformationen jedes Reifens im Sattelauflieger (102) des Kraftfahrzeugs zu lesen, wobei die Reifenkennungsinformationen in einem Kennungscodeinformationsspeicher, der in die Codeleseeinheit (38) eingesetzt ist, gespeichert sind; und
eine Steuereinheit (32), um das Weiterleiten der zweiten Reifeninformationen zu verarbeiten, wobei die Steuereinheit die zweiten Reifeninformationen verarbeitet, wenn die Reifenkennungsinformationen in den von dem Reifendrucksender (20a) gesendeten zweiten Reifeninformationen mit den von der Codeleseeinheit (38) gelesenen Reifenkennungsinformationen übereinstimmen.

12. Reifendruck-Überwachungssystem nach Anspruch 11, wobei die Weiterleitungseinrichtung (30) ferner Folgendes umfasst:
eine Nenndruck-Einstellschaltung (37), um eine Schnittstelle bereitzustellen, um einen Nenndruckwert jedes Reifens im Sattelauflieger (102) des Kraftfahrzeugs einzustellen.

13. Reifendruck-Überwachungssystem nach Anspruch 10, wobei der Empfänger (40) die Reifenkennungsinformationen in Übereinstimmung mit den empfangenen zweiten Reifeninformationen auffrischt.

14. Reifendruck-Überwachungssystem nach Anspruch 9, wobei der Empfänger (40) ferner verwendet wird, um die von dem Reifendrucksender (20b) gesendeten ersten Reifeninformationen für jeden Reifen in der Zugmaschine (101) des Kraftfahrzeugs zu empfangen, wobei der Empfänger (40) dann, wenn die an die ersten Reifeninformationen angehängten empfangenen Reifenkennungsinformationen mit den in dem Empfänger (40) gespeicherten Reifenkennungsinformationen übereinstimmen, die ersten Reifeninformationen als die Reifeninformationen der Zugmaschine (101) des Kraftfahrzeugs verarbeitet.

15. Reifendruck-Überwachungssystem nach Anspruch 14, wobei der Empfänger (40) Folgendes umfasst:
eine Codeleseeinheit (45), um die Reifenkennungsinformationen jedes Reifens in der Zugmaschine (101) des Kraftfahrzeugs zu lesen, wobei die Reifenkennungsinformationen in einem Kennungscodeinformationsspeicher, der in die Codeleseeinheit (45) eingesetzt ist, gespeichert sind; und
eine Nenndruck-Einstellschaltung (47), um eine Schnittstelle bereitzustellen, um den Nenndruckwert jedes Reifens in der Zugmaschine (101) des Kraftfahrzeugs einzustellen.

## Revendications

1. Système de surveillance de la pression d'un pneu adapté à une automobile comportant un tracteur (101) et une remorque interchangeable (102), ledit système de surveillance de la pression d'un pneu comprenant :
un enregistreur (10) placé dans le tracteur (101) de l'automobile pour transmettre périodiquement sans fil un code enregistré de ladite automobile ;
un relais (30) placé dans la remorque (102) pour relayer une deuxième information de pneu transmise par un émetteur de pression de pneu (20a) pour chaque pneu dans la remorque de l'automobile, lequel relais (30) lorsqu'il reçoit le code enregistré relaye la deuxième information de pneu après avoir joint le code enregistré à la deuxième information de pneu ; et
un récepteur (40) placé dans le tracteur (101) de l'automobile pour recevoir la deuxième information de pneu relayée par le relais, lequel récepteur procède au traitement de la deuxième information de pneu au titre d'information de pneu de la remorque (102) si le code enregistré contenu dans la deuxième information de pneu est conforme au code enregistré de ladite automobile mémorisé dans le récepteur (40).

2. Système de surveillance de la pression d'un pneu selon la revendication 1, dans lequel ledit enregistreur transmet périodiquement ledit code enregistré.

3. Système de surveillance de la pression d'un pneu selon la revendication 1, dans lequel ladite deuxième information de pneu comprend une information d'identification de pneu et une pression de pneu, et dans lequel l'information d'identification de pneu correspond à l'information d'identification de l'émetteur de pression de pneu dans la remorque de l'automobile.

4. Système de surveillance de la pression d'un pneu selon la revendication 3, dans lequel ledit relais (30) comprend :
une unité de lecture de code (38) pour lire l'information d'identification de pneu de chaque pneu dans la remorque (102) de l'automobile, laquelle information d'identification de pneu est mémorisée dans une mémoire d'informations de code d'identification qui est introduite dans l'unité de lecture de code (38) ; et
une unité de commande (32) pour procéder au traitement du relais de la deuxième information de pneu, laquelle unité de commande (32) procède au traitement de la deuxième information de pneu si l'information d'identification de pneu dans la deuxième information de pneu transmise par l'émetteur de pression de pneu (20a) est conforme à l'information d'identification de pneu lue par l'unité de lecture de code (32).

5. Système de surveillance de la pression d'un pneu selon la revendication 4, dans lequel ledit relais (30) comprend en outre :
un circuit de définition de pression standard (37) pour fournir une interface permettant de définir une valeur de pression standard de chaque pneu dans la remorque (102) de l'automobile.

6. Système de surveillance de la pression d'un pneu selon la revendication 3, dans lequel ledit récepteur (40) rafraîchit l'information d'identification de pneu à partir de la deuxième information de pneu reçue.

7. Système de surveillance de la pression d'un pneu selon la revendication 1, dans lequel ledit récepteur (40) est en outre utilisé pour recevoir la première information de pneu transmise par l'émetteur de pression de pneu (20b) pour chaque pneu dans le tracteur (101) de l'automobile, lequel récepteur (40) procède au traitement de la première information de pneu au titre d'information de pneu du tracteur (101) de ladite automobile si l'information d'identification de pneu reçue jointe à la première information de pneu est conforme à l'information d'identification de pneu mémorisée dans le récepteur (40).

8. Système de surveillance de la pression d'un pneu selon la revendication 7, dans lequel ledit récepteur (40) comprend :
une unité de lecture de code (45) pour lire l'information d'identification de pneu de chaque pneu dans le tracteur (101) de l'automobile, laquelle information d'identification de pneu est mémorisée dans une mémoire d'informations de code d'identification qui est introduite dans l'unité de lecture de code (45) ; et
un circuit de définition de pression standard (47) pour fournir une interface permettant de définir la valeur de pression standard de chaque pneu dans le tracteur (101) de l'automobile.

9. Système de surveillance de la pression d'un pneu adapté à une automobile comportant un tracteur (101) et une remorque interchangeable (102), ledit système de surveillance de la pression d'un pneu comprenant :
un enregistreur portable distinct (10) pour transmettre sans fil un code enregistré de ladite automobile lorsqu'un opérateur le fait fonctionner ;
un relais (30) placé dans la remorque (102) pour relayer une deuxième information de pneu transmise par un émetteur de pression de pneu (20a) pour chaque pneu dans la remorque de l'automobile, lequel relais (30) lorsqu'il reçoit le code enregistré relaye la deuxième information de pneu après avoir joint le code enregistré à la deuxième information de pneu ; et
un récepteur (40) placé dans le tracteur (101) de l'automobile pour recevoir la deuxième information de pneu relayée par le relais, lequel récepteur (40) procède au traitement de la deuxième information de pneu au titre d'information de pneu de la remorque (102) si le code enregistré contenu dans la deuxième information de pneu est conforme au code enregistré de ladite automobile mémorisé dans le récepteur (40).

10. Système de surveillance de la pression d'un pneu selon la revendication 9, dans lequel ladite deuxième information de pneu comprend une information d'identification de pneu et une pression de pneu, et dans lequel l'information d'identification de pneu correspond à l'information d'identification de l'émetteur de pression de pneu dans la remorque de l'automobile.

11. Système de surveillance de la pression d'un pneu selon la revendication 10, dans lequel ledit relais (30) comprend :
une unité de lecture de code (38) pour lire l'information d'identification de pneu de chaque pneu dans la remorque (102) de l'automobile, laquelle information d'identification de pneu est mémorisée dans une mémoire d'informations de code d'identification qui est introduite dans l'unité de lecture de code (38) ; et
une unité de commande (32) pour procéder au traitement du relais de la deuxième information de pneu, laquelle unité de commande procède au traitement de la deuxième information de pneu si l'information d'identification de pneu dans la deuxième information de pneu transmise par l'émetteur de pression de pneu (20a) est conforme à l'information d'identification de pneu lue par l'unité de lecture de code (38).

12. Système de surveillance de la pression d'un pneu selon la revendication 11, dans lequel ledit relais (30) comprend en outre :
un circuit de définition de pression standard (37) pour fournir une interface permettant de définir une valeur de pression standard de chaque pneu dans la remorque (102) de l'automobile.

13. Système de surveillance de la pression d'un pneu selon la revendication 10, dans lequel ledit récepteur (40) rafraîchit l'information d'identification de pneu à partir de la deuxième information de pneu reçue.

14. Système de surveillance de la pression d'un pneu selon la revendication 9, dans lequel ledit récepteur (40) est en outre utilisé pour recevoir la première information de pneu transmise par l'émetteur de pression de pneu (20b) pour chaque pneu dans le tracteur (101) de l'automobile, lequel récepteur (40) procède au traitement de la première information de pneu au titre d'information de pneu du tracteur (101) de ladite automobile si l'information d'identification de pneu reçue jointe à la première information de pneu est conforme à l'information d'identification de pneu mémorisée dans le récepteur (40).

15. Système de surveillance de la pression d'un pneu selon la revendication 14, dans lequel ledit récepteur (40) comprend :
une unité de lecture de code (45) pour lire l'information d'identification de pneu de chaque pneu dans le tracteur (101) de l'automobile, laquelle information d'identification de pneu est mémorisée dans une mémoire d'informations de code d'identification qui est introduite dans l'unité de lecture de code (45) ; et
un circuit de définition de pression standard (47) pour fournir une interface permettant de définir la valeur de pression standard de chaque pneu dans le tracteur (101) de l'automobile.
